# EUROPÄISCHE PATENTSCHRIFT

(11) **EP 0 673 296 B1**
(45) Veröffentlichungstag und Bekanntmachung des Hinweises auf die Patenterteilung: **26.03.1997**
(21) Anmeldenummer: 94902664.5
(22) Anmeldetag: 02.12.1993
(51) Int. Cl.: B23K 35/38, B23K 9/16

(54) **SCHUTZGAS FÜR DAS LICHTBOGENSCHWEISSEN VON ALUMINIUM**
SHIELDING GAS FOR USE IN THE ARC WELDING OF ALUMINIUM
GAZ PROTECTEUR POUR SOUDER DE L'ALUMINIUM A L'ARC

(30) Priorität: 12.12.1992 DE 4241983
(43) Veröffentlichungstag der Anmeldung: 27.09.1995
(73) Patentinhaber: MESSER GRIESHEIM GMBH, D-60314 Frankfurt (DE)
(72) Erfinder: FARWER, Alfward, D-40668 Meerbusch (DE)
(86) Internationale Anmeldenummer: EP9303392
(87) Internationale Veröffentlichungsnummer: WO9413428

(56) Entgegenhaltungen:
- EP-A- 0 502 318
- DE-C- 4 028 074
- FR-A- 2 369 900
- GB-A- 1 045 620
- PATENT ABSTRACTS OF JAPAN vol. 14, no. 552 (M-1056)7. Dezember 1990 & JP,A,02 235 576 (IWATANI INTERNATL CORP) 18. September 1990

## Beschreibung

Die Erfindung betrifft ein Schutzgas für das Lichtbogenschweißen von Aluminium, bestehend aus Argon oder Gemischen aus Argon und Helium, nach dem Oberbegriff des Anspruches 1, sowie ein Verfahren nach dem Oberbegriff des Anspruches 3.

Beim Wolfram-Inertgasschweißen (WIG) und beim Metall-Inertgasschweißen (MIG) ist man bei der Schutzgasauswahl aus verschiedenen Gründen wesentlich stärker eingeschränkt als beispielsweise beim Metall-Aktivgasschweißen (MAG). So setzt man beim MAG-Schweißen dem häufig verwendeten Basisgas Argon vielfach aktive Komponenten wie Sauerstoff und Kohlendioxid zu. Im Vergleich zum Schweißen unter reinem Inertgas, also unter Argon oder Argon-Helium-Gemischen ergeben sich hierdurch erhebliche Verbesserungen beim Schweißvorgang und beim Schweißergebnis.

Besonders stark sind die Einschränkungen hinsichtlich der Zugabe weiterer Komponenten zum Inertgas bei der Aluminiumschweißung. Hier treten wegen der hohen Reaktivität des Aluminiums sofort störende Effekte auf. So verursacht Wasserstoff beispielsweise Poren, Sauerstoff und Stickstoff bilden Oxide bzw. Nitride. Dies ist allein schon vom Nahtaussehen her nicht akzeptabel. Beim Schweißen von Aluminium verwendet man daher technisch reine Inertgase, also Argon oder Argon-Helium-Gemische mit einer Reinheit von mindestens 99,996 %. Die Summe aller Verunreinigungen beträgt daher maximal 40 vpm.

Aus der DE-PS 40 28 074 ist es bekannt, zur Verbesserung des Schweißvorganges und des Schweißergebnisses dem Inertgas 80 vpm bis 250 vpm Stickstoff zuzumischen.

Der Erfindung liegt die Aufgabe zugrunde, eine Alternative zu dem aus der DE-PS 40 28 074 bekannten Schutzgas zu finden.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Weiterhin wird ein Verfahren gemäß dem Anspruch 3 vorgeschlagen.

Vorteilhafte Weiterbildungen der Erfindung sind in den Unteransprüchen angegeben.

Aus der FR-A-2 369 900 ist es bekannt, beim Lichtbogenschweißen dem Inertgas Distickstoffoxid zuzumischen, um das auch am Lichtbogen entstehende Ozon zu beseitigen. Der Distickstoffoxidanteil liegt hierbei oberhalb 0,1 %.

Es hat sich überraschend gezeigt, daß durch die erfindungsgemäße Beimischung geringer Mengen von Stickstoff und Distickstoffoxid N₂O (Lachgas), welche einerseits deutlich über den zulässigen maximalen Verunreinigungen im Schutzgas liegen, andererseits aber auch deutlich unter den üblichen Beimischungsmengen von Gasgemischen liegen, sich vorteilhafte Effekte ergeben. Der Spielraum für die N₂/N₂O-Zugabe ist daher sehr eng und bewegt sich zwischen mindestens 80 vpm und höchstens 250 vpm. Die Anteile von N₂ und N₂O können dabei in beliebigem Verhältnis stehen.

Die Vorteile bestehen beim Wechselstrom-WIG-Schweißen vor allem in einem ruhiger und stabiler brennenden Lichtbogen. Gegenüber dem Schweißverfahren nach dem Stand der Technik ist der Lichtbogen konzentrierter und ermöglicht eine höhere Energieeinbringung.

Ebenfalls groß sind die Vorteile beim MIG-Schweißen von Aluminium. Es ergibt sich auch hier ein sehr ruhiger Werkstoffübergang mit dem Ergebnis, daß die Nähte äußerst blank bleiben. Weiter ergibt sich ein verbessertes sehr glattes Nahtflankenanfließen und der Einbrand wird intensiviert.

Der bevorzugte Bereich für die erfindungsgemäße Beimischung von N₂/N₂O erstreckt sich von 120 vpm bis 180 vpm mit einem Optimum um 150 vpm.
Bei N₂/N₂O-Gehalten unter 80 vpm verschwinden die genannten vorteilhaften Effekte, bei N₂/N₂O-Gehalten oberhalb 250 vpm treten dagegen störende Nebeneffekte auf. So gibt es beim WIG-Schweißen störende Nahtverfärbungen und beim MIG-Schweißen sacken die Kehlnähte stark durch.

Das Schutzgas mit der erfindungsgemäßen Beimischung aus N₂/N₂O kann auf verschiedene Art hergestellt werden. Entweder wird direkt das Gemisch aus den Ausgangskomponenten erzeugt, oder es wird zunächst ein Muttergemisch höherer Konzentration erzeugt, dem gasförmig zugemischt wird. Auch die Mischung in der flüssigen Phase ist möglich.

In Sonderfällen kann außer N₂/N₂O auch etwas Sauerstoff beigemischt werden, ebenfalls in Mengen, die nur wenig oberhalb der Verunreinigungen im Inertgas technischer Qualität liegen.

Vergleichsuntersuchungen zum Einbrand wurden durchgeführt zwischen reinem Argon und einem Argon mit 150 vpm N₂/N₂O-Zusatz mit 50% N₂-Anteil.

Besonders gut kann das Einbrandverhalten im Vergleich mit sog. Auftragsschweißungen dargelegt werden, wobei so geschweißt wird, daß keine völlige Durchschweißung erfolgt.

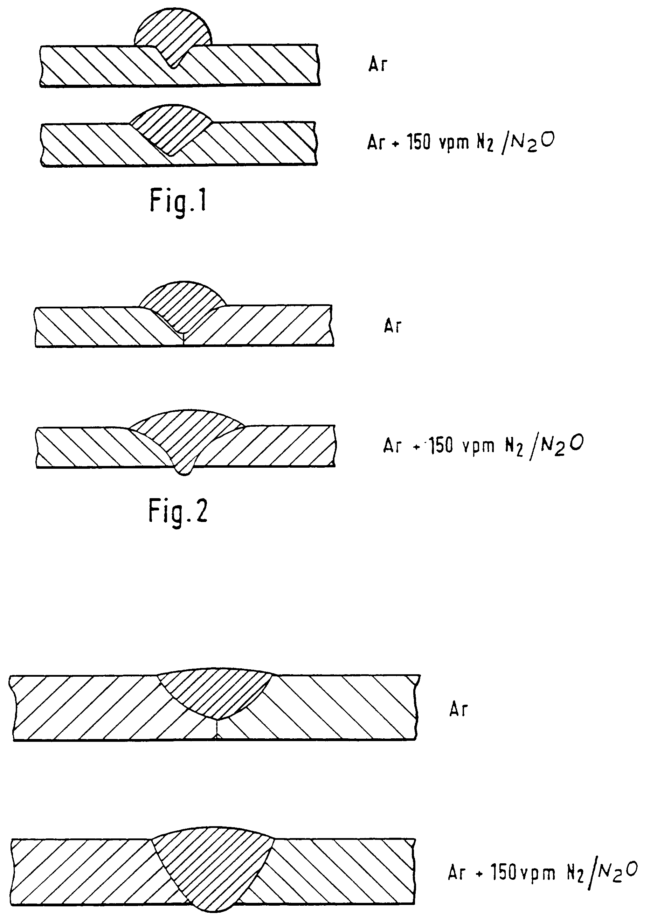

Fig.1 zeigt das Ergebnis einer Metall-Inertgas-Auftragsschweißung bei 100 A auf einem 5 mm dicken Aluminiumblech. Verwendet wurde eine 1,2 mm dicke Drahtelektrode aus einer Al-Si-Legierung (AlSi5). Die Schweißgeschwindigkeit betrug 0,3 m/min. Mit reinem Argon ergibt sich ein sehr instabiles Schweißen und eine Metallausbringung ohne richtige Anbindung am Blech, der Zusatzwerkstoff liegt stark überwölbt auf. Dagegen intensiviert der geringe N₂/N₂O-Zusatz den Einbrand so stark, daß sich eine glatte einwandfreie Schweißraupenoberseite mit normalem Einbrandprofil und sicherer Flankenbindung ergibt.

Fig.2 zeigt eine Verbindungsschweißung an einem 5 mm Blech mit einer Drahtelektrode aus einer Al-Mg-Mu-Legierung (AlMg4, 5Mn). Reines Argon hat hier bei einer Stromstärke von 130 A einen unzureichenden Einbrand, mit 150 vpm N₂/N₂O-Zusatz wird eine sichere Durchschweißung erreicht. (Schweißgeschwindigkeit 0,35 m/min). Auch ist die Nahtoberseite feinschuppiger und die Nahtüberwölbung geringer.

Fig.3 zeigt die Einbrände einer WIG-Schweißung im Vergleich an einem 8 mm-Blech mit 250 A. Will man mit Argon eine Durchschweißung erreichen, muß man die Schweißgeschwindigkeit etwa um 20% reduzieren.

Als grundsätzlicher Vorteil kam bei Zumischung von N₂/N₂O sehr deutlich hinzu, daß sowohl das Zündverhalten als die Lichtbogenstabilität immer günstiger waren.

## Patentansprüche

1. Schutzgas für das Lichtbogenschweißen von Aluminium, bestehend aus Argon oder Gemischen aus Argon und Helium, wobei das Argon oder das Gemisch aus Argon und Helium eine Reinheit besser als 99,996 % besitzt, gekennzeichnet durch eine Beimischung von 80 vpm bis 250 vpm Stickstoff und Distickstoffoxid in beliebigem Mischungsverhältnis.

2. Schutzgas nach Anspruch 1,
gekennzeichnet durch eine Beimischung von 120 vpm bis 180 vpm N₂/N₂O.

3. Verfahren zum Wolfram-Inertgasschweißen und Metall-Inertgasschweißen von Aluminium, mit einem Inertgas aus Argon oder einem Gemisch aus Argon und Helium, wobei das Inertgas eine Reinheit besser als 99,996 % besitzt,
dadurch gekennzeichnet,
daß dem aus Argon oder Gemischen von Argon und Helium bestehenden Inertgas 80 vpm bis 250 vpm N_{2/}N₂O beigemischt sind.

4. Verfahren nach Anspruch 3,
dadurch gekennzeichnet,
daß dem Inertgas 120 vpm bis 180 vpm N₂/N₂O beigemischt sind.

## Claims

1. Shielding gas for arc-welding of aluminium, consisting of argon or mixtures of argon and helium, the argon or argon and helium mixture having a purity better than 99.996%, characterized by an admixture of 80 vpm to 250 vpm of nitrogen and dinitrogen oxide in any desired mixing ratio.

2. Shielding gas according to Claim 1, characterized by an admixture of 120 vpm to 180 vpm of N₂/N₂O.

3. Process for tungsten-inert gas-welding and metal-inert gas-welding of aluminium, using an inert gas of argon or a mixture of argon and helium, the inert gas having a purity better than 99.996%, characterized in that 80 vpm to 250 vpm of N₂/N₂O are admixed to the inert gas consisting of argon or mixtures of argon and helium.

4. Process according to Claim 3, characterized in that 120 vpm to 180 vpm of N₂/N₂O are admixed to the inert gas.

## Revendications

1. Gaz protecteur pour la soudure à l'arc d'aluminium se composant d'argon ou de mélanges d'argon et d'hélium, dans lequel l'argon ou le mélange d'argon et d'hélium ont une pureté supérieure à 99,996 %,
caractérisé par
une addition de 80 vpm à 250 vpm d'azote et de dioxyde d'azote dans un rapport de mélange quelconque.

2. Gaz protecteur selon la revendication 1,
caractérisé par
une addition de 120 vpm à 180 vpm de N₂/N₂O.

3. Procédé de soudage de tungstène sous gaz inerte et de soudage sous gaz inerte de métal d'aluminium, avec un gaz inerte d'argon ou d'un mélange d'argon et d'hélium, dans lequel le gaz inerte a une pureté supérieure à 99, 996 %,
caractérisé en ce que
au gaz inerte composé d'argon ou de mélanges d'argon et d'hélium on ajoute de 80 vpm à 250 vpm de N₂/N₂O.

4. Procédé selon la revendication 3,
caractérisé en ce que
au gaz inerte on ajoute de 120 vpm à 180 vpm de N₂/N₂O.
